# DEMANDE DE BREVET EUROPEEN

(11) **EP 1 988 404 A1**
(43) Date de publication de la demande: **05.11.2008**
(21) Numéro de dépôt: 07107456.1
(22) Date de dépôt: 03.05.2007
(51) Int. Cl.: G01R 31/36, H02J 7/00

(54) **Dispositif de transmission d'information de gestion d'une batterie de puissance**

(71) Demandeur: Erun Sàrl, 1400 Yverdon-les-Bains (CH)
(72) Inventeur: Wolfsberger, Martin, 1450, Sainte-Croix (CH)
(74) Mandataire: Leman Consulting S.A.

(57) **Abrégé**

Le problème à résoudre est de transmettre des signaux d'état (Oa) entre un bloc de batterie rechargeable composant une batterie de puissance par la mise en série d'une pluralité de blocs de batterie, à un circuit d'exploitation (EX_CIR), sans consommation sur le bloc de batterie.
La présente invention se propose de résoudre le problème ci-dessus par un dispositif de liaison entre au moins un circuit de contrôle (CTRL) d'un bloc de batterie et un circuit d'exploitation (EX_CIR) d'une batterie de puissance formée par une pluralité de blocs de batterie connectés en série, ledit circuit de contrôle (CTRL) transmettant audit circuit d'exploitation au moins un signal d'état (Oa) actif lorsque le bloc de batterie est en état de marche, ledit dispositif de liaison étant caractérisé en ce qu'il comprend au moins deux opto-coupleurs (Opt1,Opt2) agissant en série, le premier opto-coupleur (Opt1) étant activé par le circuit d'exploitation (EX_CIR), le second opto-coupleur (Opt2) étant active par le circuit de contrôle (CTRL) par le signal d'état (Oa).

## Description

### Introduction

La présente invention concerne le domaine des batteries, en particulier la gestion de l'état desdites batteries.

### Etat de la technique

L'apparition de batteries à haute capacité à ouvert la voie à des applications nouvelles, telles que la traction. En effet, pour pouvoir déplacer un véhicule ou un bateau, il est impératif de disposer d'une capacité importante d'énergie pouvant être rapidement disponible.

L'évolution de la technologie des batteries rechargeables vise à augmenter la capacité d'une batterie par unité de volume. Les batteries bien connues au plomb ont une densité de 30 Wh/kg et conviennent mal à des véhicules légers car la masse de la batterie, pour une autonomie suffisante, représente plus que le poids du véhicule.

Les véhicules hybrides d'aujourd'hui utilisent la technologie Lithium-Ion qui offre une plus grande densité (env. 160 Wh/kg) mais le poids de telles batteries, si l'on voulait utiliser que cette source d'énergie, reste une barrière importante au développement de ce type d'application. Parallèlement au poids et donc à la densité énergétique d'une telle batterie, son coût reste une donnée importante, coût qui est généralement directement dépendant de la taille de la batterie.

Ainsi, avec l'avènement de la technologie Lithium-Polymer et une densité d'env. 170 Wh/kg, s'ouvrent d'autres applications et en particulier l'utilisation de telles batteries pour déplacer des véhicules, motos ou bateaux.

Les éléments de ce type, pour qu'ils puissent durer et donc fournir leur pleine capacité pendant les 500 à 1000 cycles pour lesquels ils sont prévus, doivent impérativement être chargés et déchargés selon un cahier des charges très rigoureux.

La tension nominale d'un élément Li-On étant de 3,7V, il n'est pas concevable de les charger individuellement et ils sont donc assemblés en série. Pour un bloc de 15V, 4 éléments montés en série sont chargés simultanément par une source de tension. Pour éviter qu'un élément atteigne la valeur de limite de charge avant les autres, et voit sa chimie détériorée, un circuit de contrôle est placé sur le bloc de 4 éléments et assure un équilibrage de chaque élément en dérivant une partie du courant dans une résistance lorsque l'élément concerné est arrivé à son maximum.

Ce circuit de contrôle est essentiellement un comparateur de tension très précis et qui fournit des informations telles que tension trop faible, tension trop haute. Le propre de ce circuit, en plus de sa précision, est sa faible consommation intrinsèque (quelques micro-ampères).

Ce circuit délivre un signal logique indiquant l'état normal, sous-charge ou surcharge par deux lignes d'état. Pour des raisons évidentes de sécurité, l'état normal est signalé par l'activation de la sortie afin que si le circuit de contrôle devait être endommagé, un signal d'erreur soit produit, c'est-à-dire sous et surcharge simultanément.

Les sorties du circuit de contrôle sont traitées par le circuit d'exploitation qui va autoriser l'utilisation de la batterie ou au contraire, gérer la recharge.

Les engins de transport disposent généralement d'une deuxième batterie dite de supervision, en plus de la batterie de puissance. Cette batterie de supervision permet d'une manière indépendante de recevoir les signaux du circuit de contrôle et de prendre les décisions qui s'imposent si la batterie de puissance vient à bout de sa charge. Le circuit d'exploitation est de ce fait alimenté par la batterie de supervision et peut réduire la puissance prélevée sur la batterie de puissance si la charge arrive à par exemple 20% de la capacité nominale.

La particularité des engins de transport utilisant des batteries de puissance est qu'ils utilisent des moteurs électriques à tensions élevées. Par tension élevée, on entend des tensions de 50 à 300 Volts.

Dans ce cas de figure, et pour des questions de modularité et de maintenance, on va premièrement produire des blocs de tension basse et les assembler en série pour obtenir la tension finale souhaitée. Chaque bloc dispose de son circuit de contrôle fournissant les signaux d'état de son bloc.

Le problème se pose lorsque ces 20 blocs doivent fournir 40 signaux au circuit d'exploitation. En effet, le référentiel de chaque bloc est différent, par exemple le bloc 10 dans un arrangement de bloc de 15V à son zéro à une tension 135V par rapport au référentiel du circuit d'exploitation.

Une première solution serait de diviser cette tension par 10 et grâce à un comparateur de tension, déterminer le statut de chaque signal entre les deux tensions de 135V et 142V (le signal étant donné sur 5V).

Cette manière de faire montre vite ses limites car la tension de 135V est loin d'être stable car résultant de la somme des tensions des autres blocs.

Une autre solution est l'utilisation de coupleurs optiques. Le signal sortant du circuit de contrôle du bloc de batterie alimente une LED qui autorise le passage du courant dans le transistor adjacent. Le problème se pose du fait que l'état actif du circuit de contrôle et représentant un état de charge normal, est l'activation de la LED. Ainsi, un courant de plusieurs milliampères sera consacré à transmettre un état « en ordre » de la batterie, même lors du stockage de ladite batterie. Ce courant n'est pas acceptable et donc cette solution est pas utilisable.

### Brève description de l'invention

Le problème à résoudre est de transmettre des signaux d'état entre un bloc de batterie rechargeable composant une batterie de puissance par la mise en série d'une pluralité de blocs de batterie, à un circuit d'exploitation, sans consommation sur le bloc de batterie.

La présente invention se propose de résoudre le problème ci-dessus par un dispositif de liaison entre au moins un circuit de contrôle d'un bloc de batterie et un circuit d'exploitation d'une batterie de puissance formée par une pluralité de blocs de batterie connectés en série, ledit circuit de contrôle transmettant audit circuit d'exploitation au moins un signal d'état actif lorsque le bloc de batterie est en état de marche, ledit dispositif de liaison étant caractérisé en ce qu'il comprend au moins deux opto-coupleurs agissant en série, le premier opto-coupleur étant activé par le circuit d'exploitation, le second opto-coupleur étant activé par le circuit de contrôle par le signal d'état.

Par activation d'un opto-coupleur, on entend le passage d'un courant dans la LED dudit opto-coupleur. Ainsi, l'activation du premier opto-coupleur est assurée par le circuit d'exploitation et autorise ainsi le second opto-coupleur à fonctionner c'est-à-dire que le courant provenant du circuit de contrôle pourra alimenter la LED du second opto-coupleur.

De ce fait, en l'absence d'activation de la part du circuit d'exploitation, la LED alimentée par le circuit de contrôle ne reçoit aucun courant et aucun courant n'est prélevé sur le bloc de batterie.

C'est le circuit d'exploitation qui décide quand le circuit de contrôle va consommer du courant. A l'état de repos, par exemple lors du stockage de la batterie, le circuit d'exploitation n'active pas son opto-coupleur et aucun courant n'est consommé par le circuit de contrôle.

### Brève description des figures

L'invention sera mieux comprise grâce à la description détaillée qui va suivre en se référant aux dessins annexés dans lesquels :
- la figure 1 illustre le dispositif de liaison.

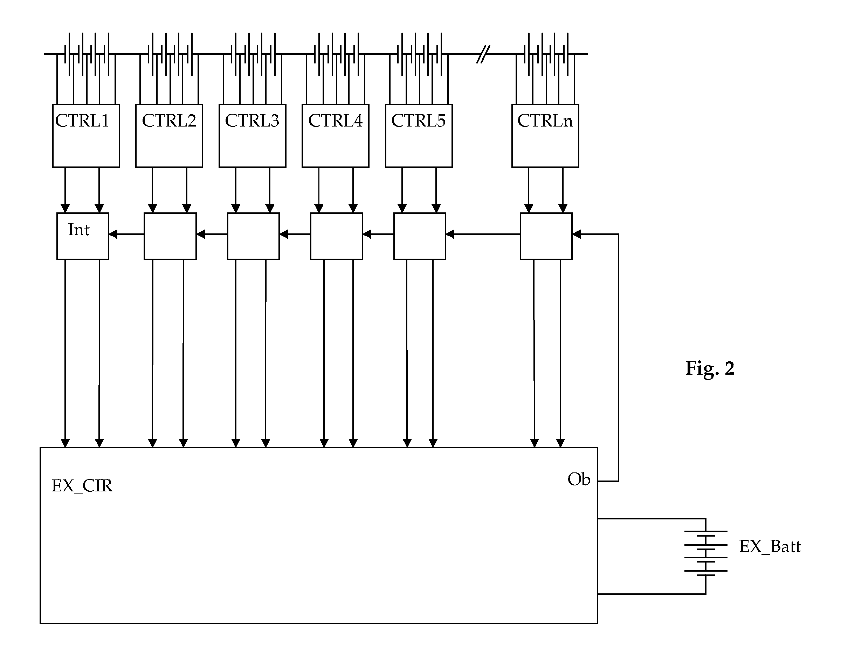

- la figure 2 illustre le bloc de batterie avec son circuit d'exploitation
- la figure 3 illustre un module de sommation commun à plusieurs circuit de contrôle

### Description détaillée

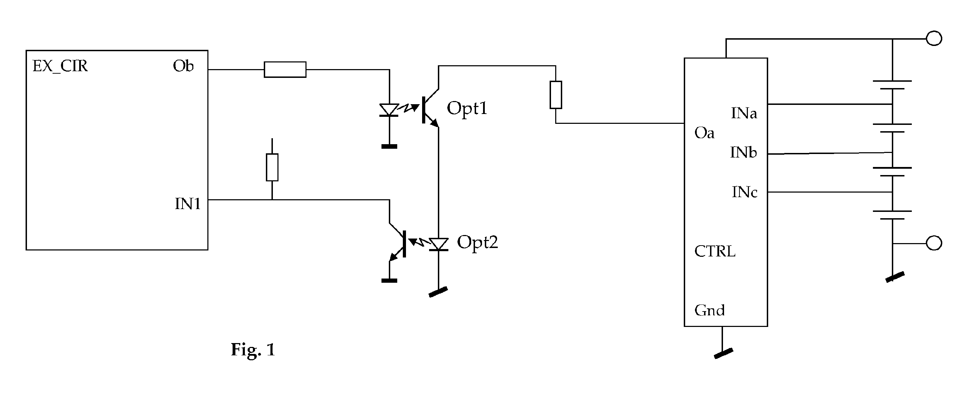

La figure 1 illustre schématiquement les divers éléments entrant en fonction pour le contrôle d'un bloc de batterie. Le circuit d'exploitation EX_CIR a de nombreuses fonctions telles que par exemple afficher la tension de la batterie de puissance, indiquer son état de charge et assurer la recharge de la batterie.

En plus de cela, ce circuit reçoit les signaux de contrôle de chaque bloc de batterie composant la batterie de puissance. Il n'est pas rare de disposer de batteries pouvant délivrer des tensions de plus de 220V, ce qui signifie la mise en série de 60 éléments de batterie. Pour des raisons de commodité, on assemble plusieurs éléments pour former un bloc de batterie, généralement de 4 éléments. La batterie de puissance sera donc constituée de 15 blocs de batterie montés en série.

Chacun de ces blocs dispose d'un circuit de contrôle CTRL dont la tâche essentielle est la surveillance de la tension de chaque élément. En effet, la tension doit toujours rester dans des limites précises sous peine d'usure prématurée, de surchauffe voire d'explosion. Lors de la charge, chaque élément est surveillé par le circuit de contrôle grâce aux entrée INa à INc. Dès qu'un élément atteint la tension de seuil admise, une partie du courant de charge est dérivée dans une résistance montée parallèlement à l'élément et diminuant ainsi fortement le courant de charge dans ledit élément. L'élément continue à se charger mais à une vitesse réduite, permettait aux autres éléments de rattraper le niveau de tension de l'élément qui a déjà atteint la tension de seuil. La tension de seuil est inférieure à la tension maximale de l'élément afin de freiner l'augmentation de tension dans un élément dès qu'un tel élément à atteint la tension de seuil. Ainsi, la tension maximale sera approchée par tous les éléments à peu près en même temps. Lorsque l'un des éléments a atteint la tension maximale, le circuit de contrôle envoie un signal Oa "surcharge" au circuit d'exploitation pour l'informer de cet état. Parallèlement, au fur et à mesure que chaque élément atteint la tension de seuil, sa résistance de dérivation est activée et le courant restant traversant cet élément est calculé pour ne pas endommager l'élément. Dans un bloc d'éléments équilibré, tous les éléments ont dépassé la tension de seuil lorsque l'un de ceux-ci atteint la tension maximale.

Le signal d'état Oa envoyé par le circuit de contrôle est actif quand tout est normal afin de pouvoir détecter une panne du circuit de contrôle. Ainsi le signal d'état Oa est en permanence actif pendant la charge jusqu'à ce que les 4 éléments soient chargés. A ce moment là, le courant alimentant le circuit de contrôle est prélevé sur le courant de charge et cela ne pose aucun problème.

En utilisation, le circuit de contrôle indique par un autre signal d'état "déchargé" que la tension minimale de l'un des éléments est atteinte. Dès que l'un des éléments atteint la tension minimale, le signal d'état "déchargé" est activé et le circuit d'exploitation prend les décisions en conséquence. Une fois encore, il est donc utile que tous les éléments arrivent environ en même temps à cette limite inférieure afin d'exploiter au maximum l'énergie du bloc de batterie.

Lorsque la batterie est chargée et stockée, par exemple lorsque le véhicule est au parking, le circuit de contrôle est uniquement alimenté par le bloc de batterie. Il est donc impératif que le courant consommé à ce moment soit le plus faible possible.

Comme il a été expliqué dans le préambule, la présence d'un découplage galvanique est nécessaire car chaque bloc de batterie à une tension de référence différente, du fait du montage en série de tous les blocs. Un bloc de batterie bien que ne produisant pas plus de 15V peut voir son pôle de référence placé à 180V par rapport à la référence du circuit de supervision. L'avantage d'utiliser un opto-coupleur permet de rapporter la référence avec des différences de tensions importantes entre les deux parties de l'opto-coupleur.

Lorsque le circuit d'exploitation est activé, le signal de commande Ob est activé ce qui a pour conséquence de faire conduire le premier opto-coupleur Opt1. Le signal d'état Oa peut alors activer le second opto-coupleur Opt2 qui est connecté à l'entrée de lecture IN1 du circuit d'exploitation. Le signal d'état est dès lors transmis au circuit d'exploitation grâce au second opto-coupleur Opt2.

Une fois le circuit d'exploitation mis en veille, par exemple pour le stockage de la batterie, le signal de commande Ob est mis à zéro ce qui à pour conséquence de bloquer le premier opto-coupleur Opt1. Le premier opto-coupleur Opt1 étant interrompu, tout passage de courant dans le LED du second opto-coupleur est donc interrompu et le circuit de contrôle ne va pas consommer de courant pour activer la LED du second opto-coupleur OPT2.

Selon un mode particulier de l'invention, le signal de commande est délivré par intermittence lors de l'utilisation de la batterie de puissance. En effet, ce qui importe est de recevoir le signal de la part du circuit de contrôle lorsqu'il est utilisé. Ceci peut se faire par interrogation, par exemple toutes les secondes. Dès lors, le signal de commande Ob peut durer quelques millisecondes, temps d'un cycle de lecture durant lequel du courant sera consommé par le circuit de contrôle pour activer le LED du second opto-coupleur Opt2.

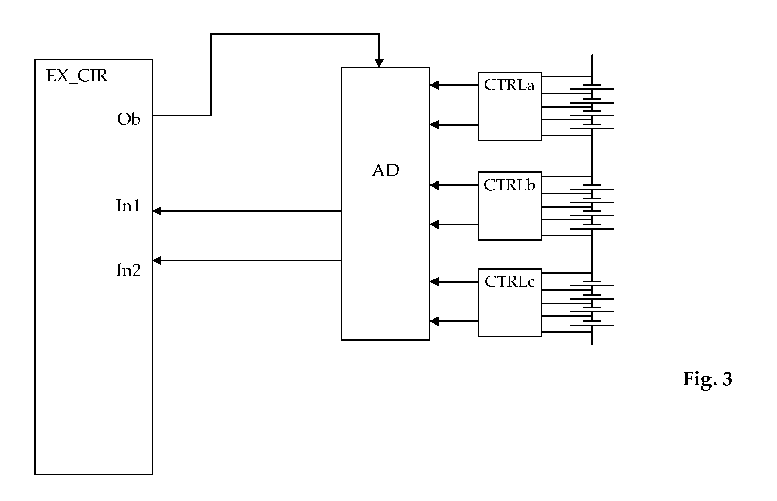

Sur la figure 3 est illustré un principe de sommation des signaux d'états. Une unité de batterie peut comprendre 3 à 4 blocs de batterie, chaque bloc de batterie disposant de son circuit de contrôle et donc de ses deux signaux d'état. Un module de sommation AD est placé entre plusieurs circuits de contrôle CTRLa, CTRLb, CTRLc et fourni deux signaux d'état au circuit d'exploitation EX_CIR. Du fait de la logique négative (zéro en cas d'alarme), la fonction du module de sommation est une fonction ET. Ce module utilisant des éléments électroniques (FET, résistances), la commande de commande Ob va couper l'alimentation de tous ces éléments grâce à un ou des opto-coupleurs. Ainsi, l'opto-coupleur Opt1 n'est pas directement placé sur le signal d'état Oa d'un circuit de contrôle mais sur un ensemble électronique de sommation de plusieurs signaux d'état.

## Revendications

1. Dispositif de liaison entre au moins un circuit de contrôle (CTRL) d'un bloc de batterie et un circuit d'exploitation (EX_CIR) d'une batterie de puissance formée par une pluralité de blocs de batterie connectés en série, ledit circuit de contrôle (CTRL) transmettant audit circuit d'exploitation (EX_CIR) au moins un signal d'état (Oa) actif lorsque le bloc de batterie est en état de marche, ledit dispositif de liaison étant **caractérisé en ce qu'**il comprend au moins deux opto-coupleurs (Opt1, Opt2) agissant en série, le premier opto-coupleur (Opt1) étant activé par le circuit d'exploitation (EX_CIR), le second opto-coupleur (Opt2) étant activé par le circuit de contrôle (CTRL) par le signal d'état (Oa).

2. Dispositif de liaison selon la revendication 1, dans une configuration dans laquelle la batterie de puissance est divisée en une pluralité d'unité de batterie comprenant chacune au moins deux blocs de batterie, **caractérisé en ce qu'**il comprend un module de sommation (AD) d'une part recevant les signaux d'état des circuits de contrôle (CTRLa, CTRLb, CTRLc) et d'autre part fournissant un signal d'état (Oa) représentatif de l'état de l'ensemble des blocs de batterie au circuit d'exploitation (EX_CIR) via le premier opto-coupleur (Opt1), le second opto-coupleur (Opt2) activant ou désactivant le module de sommation sur commande du circuit d'exploitation.

3. Dispositif de liaison selon la revendication 1, **caractérisé en ce que** le circuit de contrôle (CTRL) transmet deux signaux d'état via deux opto-coupleurs au circuit d'exploitation (EX_CIR), l'un représentant l'état "surcharge" du bloc de batterie, l'autre représentant l'état "déchargé" dudit bloc de batterie.

4. Dispositif de liaison selon la revendication 2, **caractérisé en ce que** le module de sommation (AD) transmet deux signaux d'état via deux opto-coupleurs au circuit d'exploitation (EX_CIR), l'un représentant l'état "surcharge" de l'unité de batterie, l'autre représentant l'état "déchargé" de ladite unité de batterie.

5. Dispositif de liaison selon l'une des revendications 1 à 4, **caractérisé en ce que** le premier opto-coupleur (Opt1) est activé par intermittence par le circuit d'exploitation (EX_CIR) durant un cycle de lecture du ou des signaux d'état provenant de la batterie de puissance.
